# EUROPEAN PATENT APPLICATION

(11) **EP 3 431 457 A1**
(43) Date of publication of application: **23.01.2019**
(21) Application number: 17766413.3
(22) Date of filing: 03.03.2017
(51) Int. Cl.: C03C 27/04, C03B 11/00, G02B 27/00

(54) **GLASS PLATE AND GLASS STRUCTURE**

(30) Priority: 17.03.2016 JP 2016054011
(71) Applicant: AGC INC., Chiyoda-ku, Tokyo 1008405 (JP)
(72) Inventor: ISHIOKA, Hideki, Tokyo 100-8405 (JP)
(74) Representative: Müller-Boré & Partner Patentanwälte PartG mbB
(86) International application number: PCT/JP2017/008557
(87) International publication number: WO 2017/159410

(57) **Abstract**

A glass plate includes a first surface and a second surface that is opposite to the first surface. The first surface is provided with a convex portion. The first surface is provided with a protruded plane protruding from the first surface. A distance from the first surface to the protruded plane is greater than or equal to a distance from the first surface to a tip of the convex portion.

## Description

### BACKGROUND OF THE INVENTION

### 1. Field of the Invention

The disclosure herein generally relates to a glass plate and a glass structure.

### 2. Description of the Related Art

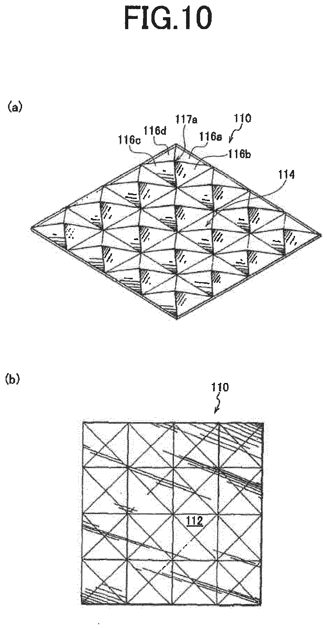

Conventionally, as illustrated in FIG. 10, a decorated glass 110 including a first planar surface 112 and a second surface 114 opposite to the first surface 112 has been known (See Patent document 1). The second surface 114 is a facet forming surface including a plurality of glass cut pieces, each of which is defined by facets 116a, 116b, 116c, and 116d.

### [Citation List]

### [Patent Literature]

[PTL 1] Japanese Patent No. 3184522

### SUMMARY OF THE INVENTION

### [Technical Problem]

However, there has been a problem, in the configuration disclosed in Patent Document 1, that when the decorated glass is bonded to a wall surface or the like, with the facet forming surface (i.e. convex portion forming surface) as an adhesive surface, a thickness of an adhesive material is likely to be uneven, and it is difficult to obtain a stable adhesive strength.

In view of the aforementioned background, the present invention mainly aims at providing a glass plate, in which a stable adhesive strength can be easily obtained when the convex portion forming surface of the glass plate is bonded as an adhesive surface.

### [Solution to Problem]

In order to achieve the aim, the present invention provides a glass plate including a first surface and a second surface that is opposite to the first surface,
the first surface being provided with a convex portion,
the first surface being provided with a protruded plane that protrudes from the first surface, and
a distance from the first surface to the protruded plane being greater than or equal to a distance from the first surface to a tip of the convex portion, is provided.

### [Advantageous effect of Invention]

According to an aspect of the present invention, a glass plate, in which a stable adhesive strength can be easily obtained when the convex portion forming surface is bonded as an adhesive surface, can be provided.

### BRIEF DESCRIPTION OF THE DRAWINGS

FIG. 1 is a plan view depicting an example of a glass plate according to an embodiment of the present invention.
FIG. 2 is a cross section of the glass plate according to the embodiment of the present invention, cut along a line A-A illustrated in FIG. 1.
FIG. 3 is a cross section depicting an example of a glass plate according to a first variation of the embodiment.
FIG. 4 is a cross section depicting an example of a glass plate according to a second variation of the embodiment.
FIG. 5 is a cross section depicting an example of a glass plate according to a third variation of the embodiment.
FIG. 6 is a cross section depicting an example of a glass plate according to a fourth variation of the embodiment.
FIG. 7 is a cross section depicting an example of a glass plate according to a fifth variation of the embodiment.
FIG. 8 is a cross section depicting an example of a glass plate according to a sixth variation of the embodiment.
FIG. 9 is a cross section depicting an example of a glass structure using the glass plate according to the embodiment.
FIG. 10 is a diagram depicting an example of a conventional glass plate.

### DETAILED DESCRIPTION OF THE PREFERRED EMBODIMENTS

In the following, with reference to drawings, a glass plate according to an embodiment or the present invention will be described.

Moreover, in the drawings for explaining embodiments, coordinates are defined by arrows in the lower left part in each drawing. An explanation will be provided by using the coordinates as necessary. Moreover, in the specification, "X-direction" is assumed to indicate not only a direction from the tail of the arrow representing X-coordinates to the tip, but also a direction inverted by 180 degrees, from the tip to the tail. "Y-direction" and "Z-direction" are also assumed to indicate not only directions from the tails of the arrow representing Y-coordinates and Z-coordinates, respectively, to the tips, but also the respective directions inverted by 180 degrees from the tips to the tails. In the specification, the X-direction and the Y-direction are also referred to as planar directions, and the Z-direction is also referred to as a plate thickness direction.

Moreover, in the specification, terms such as "parallel" or "orthogonal" allow deviations keeping with the effect of the present invention. For example, errors of about ±5° are allowed from parallel or orthogonal positional relationships in a strict sense.

Moreover, in the present application, a concave-convex portion or a convex portion is not limited to a glass cut piece. For example, the concave-convex portion or the convex portion may be a shape obtained by performing a press forming for a glass plate heated at a temperature around a softening point using a metallic mold or the like. The concave-convex portion or the convex portion may be formed by reducing a pressure of a concave portion of the metallic mold when the press forming is performed so that a glass enters a deep portion of the concave portion of the metallic mold. Moreover, a molten glass may be poured into a metallic mold and cooled, to prepare the concave-convex portion or the convex portion.

### (First embodiment)

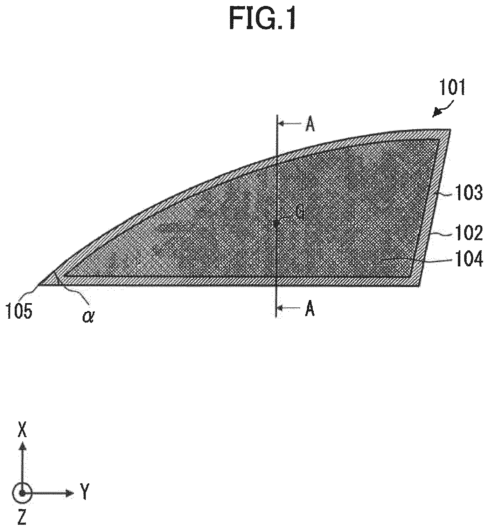

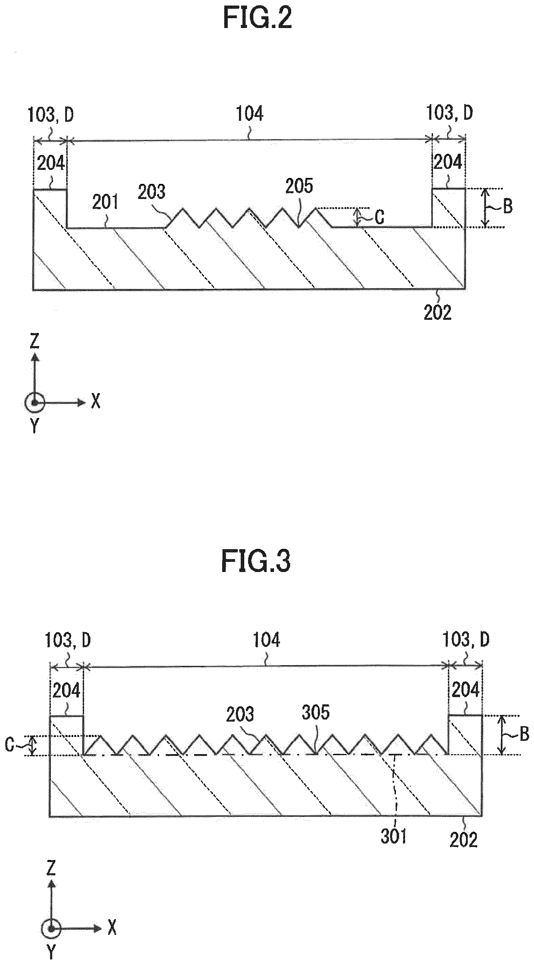

FIG. 1 is a plan view depicting an example of a glass plate according to an embodiment of the present invention. FIG. 2 is a cross section of the glass plate according to the embodiment of the present invention cut along a line of A-A, illustrated in FIG. 1. FIGS. 3 to 8 are diagrams depicting respective examples of the glass plate according to variations of the embodiment. The cross section, cut along the line of A-A, passes through a center of gravity G of the glass plate 101.

The glass plate 101 according to the first embodiment includes a first surface 201, and a second surface 202 that is opposite to the first surface 201. Moreover, in a planar view, the glass plate 101 includes a periphery region 103 along a periphery 102, and an in-plane region 104 that occupies a region inside the periphery region 103.

Moreover, the first surface 201 is provided with a convex portion 203 on the first surface 201 that is a front face. Furthermore, the first surface 201 is provided with a protruded plane 204 that protrudes from the first surface 201.

A distance B from the first surface 201 to the protruded plane 204 is greater than or equal to a distance C from the first surface 201 to a tip of the convex portion 203.

According to the above-described configuration, when the glass plate is bonded, with a convex portion forming surface, on which the convex portion is formed, as an adhesive surface, the protruded plane 204 is used as a bonding part, and thereby a stable adhesive strength can be easily obtained. This is because by arranging the protruded plane 204, which protrudes higher than the convex portions, on the convex portion forming surface, the glass plate 101 is bonded on a plane, and a film thickness of the adhesive material can be made constant easily.

When a glass plate is bonded, using a surface composed of convex portions and concave portions that are formed by adjacent convex portions for an adhesive surface, as in the related art, the thickness of the adhesive material may not be sufficient around tips of the convex portions. Moreover, around the concave portions, the thickness of the adhesive material is required to be greater than heights of the convex portions, and a large amount of adhesive material is required. Furthermore, it is difficult to make the thickness of the adhesive material constant, and a stable adhesive strength cannot be obtained easily.

In the case where the protruded plane 204 is arranged as a part for bonding, it is not necessary to arrange an adhesive material around the convex portions 203, and in the concave portions 205 that are formed by the adjacent convex portions 203. When the adhesive material exists around the convex portion 203 and in the concave portion 205, depending on refractive indices of glass and the adhesive material, the design property that, the convex portion and the concave portion originally have, may be deteriorated by the adhesive material. When the adhesive material is absent around the convex portion 203 and the concave portion 205, the design property will be maintained. Note that the embodiment is not limited to the configuration in which the adhesive material is absent around the convex portion 203 and in the concave portion 205.

Note that the protruded plane 204 is preferably formed in the periphery region 103 in a picture frame shape, along the periphery 102 of the glass plate 101. Because the film thickness of the adhesive material can be made constant easily in the picture frame shape, the glass plate 101 can be bonded more strongly and stably. In the specification of the present application, meaning of the term "along periphery" includes not only forming the protruded plane 204 continuously along the entire periphery, but also forming intermittently at an interval.

The convex portion 203 is preferably arranged, in a planar view at a corner portion, at which two sides of the glass plate 101 cross. Particularly, the convex portion 203 is preferably arranged at every corner portion. According to the above-described configuration, the glass plate 101 can be bonded more strongly and stably.

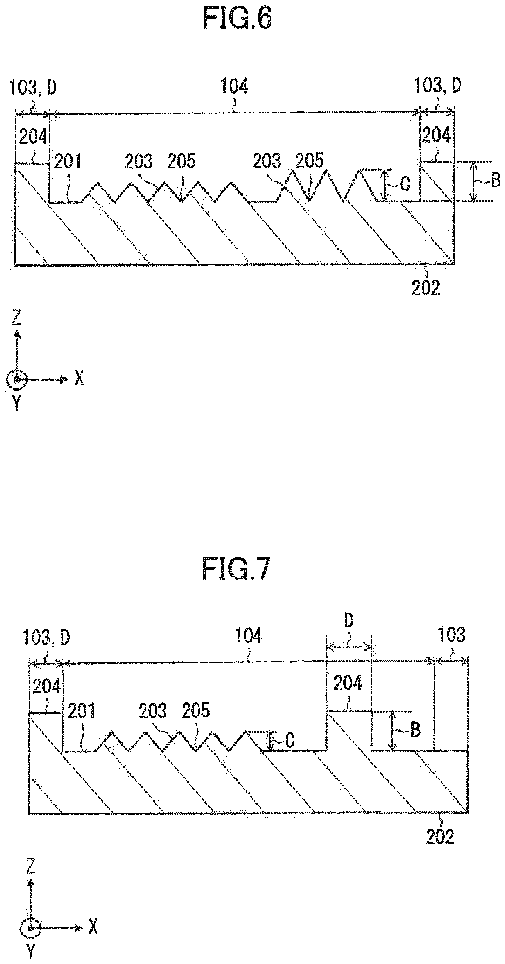

The protruded plane 204 may be formed only in a part of the periphery region 103. Moreover, the protruded plane 204 may be formed in the in-plane region 104, as illustrated in FIG. 7. When the protruded plane 204 is formed also in the in-plane region 104, the glass plate 101 can be bonded more strongly and stably.

A width D of the protruded plane 204 is preferably 5 mm or more, more preferably 10 mm or more, and further preferably 15 mm or more. When the width D of the protruded plane 204 is large, a greater bonding area can be obtained, and thereby the glass plate 101 can be bonded more strongly and stably.

In a case where a plurality of protruded planes 204 are arranged discontinuously in a cross section that passes through a center of gravity G of the glass plate 101, as illustrated in FIG. 2, the respective protruded planes 204 are preferably in the same plane. Because planes formed on the respective protruded planes are bonding surfaces, when the respective protruded planes 204 are in the same plane, it is easy to make the film thickness of the adhesive material constant, and the glass plane 101 can be bonded more strongly and stably. Note that in the specification of the present application, the meaning of "in the same plane" includes in the same curved surface with any curvature radius.

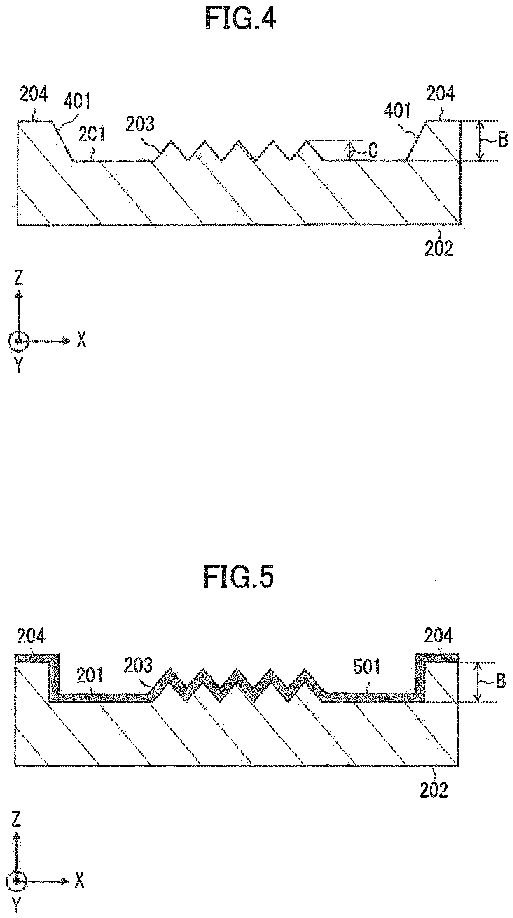

As illustrated in FIG. 4, on a boundary between the protruded plane 204 and the first surface 201, an inclined surface 401 may be formed. The inclined surface 401 connects smoothly the first surface 201 and the protruded plane 204. Thus, the glass plate 101 becomes less likely to break at the position where the protruded plane 204 protrudes from the first surface 201.

The convex portion 203 is preferably formed in the in-plane region 104 of the glass plate 101. The convex portion 203 may be formed only in a part of the in-plane region 104, or may be formed over the entire in-plane region 104. In the case where the convex portions 203 are formed over the entire in-plane region 104, a first surface 301 becomes a virtual plane that connects bottoms of a plurality of concave portions 305 formed by three or more convex portions 203, as illustrated by a dot-dashed line in FIG. 3. Furthermore, in the case where the convex portions 203 are formed over the entire surface of the in-plane region 104, and a position of the bottom of the concave portion 305 in the Z-direction varies depending on a location in the in-plane region 104, the first surface 301 is defined to be a virtual plane parallel to the X-direction, with a Z-direction position that is an average of the positions in the Z-direction of the bottoms of the respective concave portions 305 in any cross section. The plurality of convex portions 203 may be formed as in the embodiment, or only one convex portion 203 may be formed.

Moreover, as illustrated in FIG. 6, in the case where a plurality of convex portions 203 are formed, distances from the first surface 201 to tips of the convex portions 203 may be different from each other. In this case, a distance C is defined as the greatest value of the distances from the first surface 201 to the tips of the convex portions 203.

The convex portion 203 may be formed in the periphery region 103. A shape of the convex portion 203 may be a shape of a triangular pyramid or a shape of a quadrangular pyramid. The shape of the convex portion 203 may be, in FIG. 2, a shape having a depth in the Y-direction with the same cross section. According to the selection of shapes, a degree of freedom of design property will be enhanced.

The tip of the convex portion 203 may have a tapered shape. The tapered shape means a shape that is narrowed gradually from the first surface 201 toward the tip of the convex portion 203. According to the aforementioned configuration, a design property using a refraction and a reflection of light that enters the glass plate 101 can be given to the glass plate 101. The tip portion of the convex portion 203 may have an acute shape, or may have an optional curvature radius.

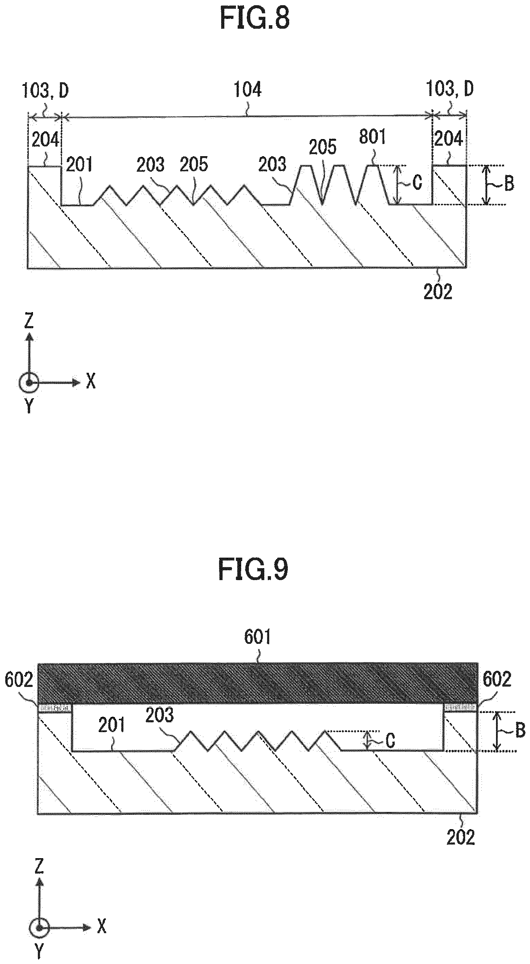

Moreover, the shape of the tip of the convex portion 203 may have a planar shape. The tip may be, for example, a polished surface 801, as illustrated in FIG. 8. When the distance C from the first surface 201 to the tip of the convex portion 203 is greater than the distance B from the first surface 201 to the protruded plane 204, the tip of the convex portion 203 may be ground so as to make the distance C less than or equal to the distance B. The protruded plane 204 may be polished.

The distance C from the first surface 201 to the tip of the convex portion 203 is preferably 0.1 mm or more, more preferably 0.5 mm or more, and further preferably 1 mm or more. Compared with the first surface 201, differences in the refraction and the reflection of light that enters the glass plate 101 become more evident, and a more elaborate design property can be given to the glass plate 101. The distance C from the first surface 201 to the tip of the convex portion 203 is preferably 20 mm or less, more preferably 18 mm or less, and further preferably 15 mm or less. Thus, the convex portion 203 becomes difficult to damage.

The glass plate 101 has an acute angle portion 105, in a planar view (FIG. 1). The acute angle portion 105 indicates a corner portion, in which an angle α between tangential lines of two crossing sides of the glass plate 100, respectively, is less than 90 degrees. In the acute angle portion 105, the glass plate 101 is liable to break, and bonding is liable to be peeled. The glass plate 101 according to the embodiment is provided with a protruded plane 204 in the acute angle portion 105. Thus, the damage of the glass plate can be controlled. Moreover, the acute angle portion 105 can be bonded more strongly.

Moreover, an area of the protruded plane 204 in the acute angle portion 105 is preferably greater than that of the protruded plane 204 in other portions. Thus, the acute angle portion 105 can be bonded more strongly.

An angle of the acute angle portion 105 is 80 degrees or less, and more preferably 70 degrees or less. According to a selection of the angle, a degree of freedom of design property in the glass plate 101 is enhanced.

Surfaces of the first surface 201, the convex portion 203, and the protruded plane 204 may be polished. According to the treatment, a die mark generated upon shaping using a metallic mold or the like can be removed, and the surface becomes smooth.
Thus, diffused reflection is controlled, and thereby the design property of the glass plate 101 is enhanced.

As illustrated in FIG. 5, each of the first surface 201, the convex portion 203, and the protruded plane 204 may have a coating layer 501 on the surface. The coating layer 501 may be a hard coating in order to enhance a scratch resistance. Moreover, the coating layer 401 may be a layer in which gold, chromium, aluminum, or a metal oxide is deposited. Because a metallic luster is given, the design property of the glass plate 101 is enhanced.

The second surface 202 may be a polished surface. When the glass plate 101 is bonded to a wall surface or the like, where the first surface 201 side of the glass plate 101 is a bonding surface, because the second surface 202 is a surface that is touched by a person, the second surface 202 is preferably smooth. Moreover, on the second surface 202, a protection layer, which is difficult to be scratched and to which fingerprints are difficult to adhere, may be formed.

The glass plate 101 has a visible light transmissivity (Tv) that is 70% or more, preferably 80% or more, and more preferably 90% or more. When the glass plate 101 is bonded to a wall surface or the like, where the first surface 201 side of the glass plate 101 is a bonding surface, a person, who sees the first surface 201 from the second surface 202 side, can sense a characteristic design property from a light that is refracted or reflected on the first surface 201.

The glass plate 101 may be a strengthened glass. The glass plate 101 may be a strengthened glass that is subjected to an air cooling strengthening or a chemical strengthening.

FIG. 9 is a diagram depicting a cross section of an example of a glass structure using the glass plate 101 according to the embodiment. The glass plate 101 is bonded to, on the protruded plane 204, the plate-like body 601 via an adhesive material 602. The adhesive material 602 may be a publicly known adhesive, or may be a double-faced tape or the like.

The plate-like body 601 may be a wall surface of a building, a glazing, a mobile apparatus such as a mobile phone or a smartphone, a vehicular interior member or a vehicular exterior member. Particularly, in the case where the plate-like body 601 is a vehicular interior member or a vehicular exterior member (vehicle decorative member), vibrations from an engine or vibrations from a road surface during vehicle travelling are applied to the glass plate 101, and the glass structure, in which high adhesive strength can be obtained, is preferably used.

### [Industrial Applicability]

The present invention relates to a glass plate and a glass structure, and particularly can be preferably used for a vehicle decorative member or the like.

The present international patent application is based on and claims the benefit of priority of Japanese Priority Application No. 2016-054011 filed on March 17, 2016, the entire contents of which are hereby incorporated by reference.

### [Reference Signs List]

101 glass plate
102 periphery
103 peripheral region
104 in-plane region
105 acute angle portion
201,301 first surface
202 second surface
203 convex portion
204 protruded plane
205,305 concave portion
401 inclined surface
501 coating layer
601 plate-like body
602 adhesive material
α angle between tangential lines of two crossing sides
G center of gravity
A-A cross section passing through center of gravity
B distance from first surface to protruded plane
C distance from first surface to tip of convex portion
D width of protruded plane

## Claims

1. A glass plate comprising a first surface and a second surface that is opposite to the first surface,
wherein the first surface is provided with a convex portion,
wherein the first surface is provided with a protruded plane protruding from the first surface, and
wherein a distance from the first surface to the protruded plane is greater than or equal to a distance from the first surface to a tip of the convex portion.

2. The glass plate according to claim 1,
wherein the tip of the convex portion has a tapered shape.

3. The glass plate according to claim 1 or 2,
wherein the protruded plane is arranged along a periphery of the glass plate.

4. The glass plate according to any one of claims 1 to 3 further comprising:
an acute angle portion in a planar view,
wherein the protruded plane is formed in the acute angle portion.

5. The glass plate according to any one of claims 1 to 4 further comprising:
an inclined surface on a boundary between the protruded plane and the first surface.

6. The glass plate according to any one of claims 2 to 5,
wherein, in a cross section passing through a center of gravity of the glass plate, a width of the protruded plane is greater than or equal to 5 mm.

7. The glass plate according to any one of claims 1 to 6,
wherein the convex portion is provided with a coating layer on a surface.

8. The glass plate according to any one of claims 1 to 7,
wherein the glass plate is a vehicle decorative member.

9. A glass structure comprising:
the glass plate according to any one of claims 1 to 8; and
a plate-like body,
wherein the protruded plane is provided with an adhesive material, and
wherein the glass plate is bonded to the plate-like body via the adhesive material.
